# EUROPÄISCHE PATENTSCHRIFT

(11) **EP 1 598 221 B1**
(45) Veröffentlichungstag und Bekanntmachung des Hinweises auf die Patenterteilung: **03.10.2007**
(21) Anmeldenummer: 05008955.6
(22) Anmeldetag: 23.04.2005
(51) Int. Cl.: B60G 15/06

(54) **Transportschutz für Kabelenden an Federbeinen**
Transportprotection for cable ends for suspension struts
Moyen de protection pour le transport pour jambes de suspension

(30) Priorität: 18.05.2004 DE 102004024523
(43) Veröffentlichungstag der Anmeldung: 23.11.2005
(73) Patentinhaber: Dr.Ing. h.c. F. Porsche Aktiengesellschaft, 70435 Stuttgart (DE)
(72) Erfinder: Tardy-Tuch, Georg von, 71272 Malmsheim (DE)

(56) Entgegenhaltungen:
- WO-A-97/19839
- DE-U- 7 246 448
- FR-A- 2 768 659
- US-A- 6 082 749
- US-B1- 6 257 601
- US-B1- 6 485 223
- PATENT ABSTRACTS OF JAPAN Bd. 012, Nr. 360 (M-746), 27. September 1988 (1988-09-27) & JP 63 116916 A (HONDA MOTOR CO LTD), 21. Mai 1988 (1988-05-21)
- PATENT ABSTRACTS OF JAPAN Bd. 2002, Nr. 05, 3. Mai 2002 (2002-05-03) & JP 2002 019441 A (PIOLAX INC; NISSAN MOTOR CO LTD), 23. Januar 2002 (2002-01-23)

## Beschreibung

Die Erfindung betrifft einen Transportschutz für Kabelenden an Federbeinen von Kraftfahrzeugen, wobei das Kabelende aus einer hohlen Kolbenstange heraustritt. Solche Federbeine sind beispielsweise Federbeine mit elektrisch verstellbaren Dämpfungseinrichtungen.

Bei derartigen Federbeinen stellt sich das Problem, dass das Kabelende während des Transportes des Federbeines beschädigt werden kann. Ein solcher Schaden ist nur aufwändig, nämlich durch eine Zerlegung des Federbeines, zu beheben. JP-A-63116916 zeigt den Aufbau der oberen Platte aus der Befestigungseinheit eines Federbeines, jedoch keinen Transportschutz

Aufgabe der Erfindung ist es daher, einen Transportschutz zu schaffen, der das Kabelende von Beschädigungen schützt. Diese Aufgabe wird durch die Merkmale von Anspruch 1 gelöst.

Merkmalen der Erfindung zufolge wird vorgeschlagen, an dem Ende der Federbeines, an dem das Kabelende aus einer hohlen Kolbenstange heraustritt, einen Plattenzuschnitt anzuordnen, der an Befestigungseinrichtungen des Federbeines so gehalten ist, dass er eine gewölbte Form annimmt. Dies wird dadurch erreicht, dass am Plattenzuschnitt der Abstand zweier gegenüberliegender Befestigungspunkte größer gewählt ist als der Abstand der korrespondierenden Befestigungseinrichtungen am Federbein. Hierbei ist es von besonderem Vorteil, dass als Transportschutz ein einfaches und günstig herzustellende Plattenmaterial verwendet werden kann, das bis zu seiner Verwendung zudem auch flach gelagert werden kann. Der für den Schutz des Kabelendes notwendige Hohlraum wird erst durch das Wölben des Plattenzuschnittes bei der Montage hergestellt. Durch die hiermit erzielte Abdeckung ist insbesondere verhindert, dass das Kabelende über Kanten, Ränder und Vorsprünge des Federbeines verläuft und zwischen diesem Rand, Kante oder Vorsprung und einer Transporteinrichtung gequetscht und damit beschädigt werden kann. Weiterhin wird vermieden, dass das Kabelende zum Anheben des Federbeines ergriffen wird.

Vorteilhafte Weiterbildungen der Erfindung sind in den Unteransprüchen beschrieben.

So weist der Plattenzuschnitt vorzugsweise drei Befestigungspunkte auf. Diese Ausführung ist besonders vorteilhaft im Hinblick auf das Aufwölben des Plattenzuschnittes: Durch zwei der Befestigungspunkte wird die Wölbung hergestellt, während der dritte Befestigungspunkt zur sicheren Fixierung dient.

Bei den Befestigungseinrichtungen am Federbein handelt es sich vorzugsweise um Schrauben oder Bolzen. In diesem Falle sind die als Öffnungen ausgeführten Befestigungspunkte des Plattenzuschnittes gegenüber dem Durchmesser der Schrauben oder Bolzen mit Untermaß ausgeführt und mit wenigstens einem seitlichen Einschnitt versehen. Beim Aufstecken des Plattenzuschnittes auf die Schrauben oder Bolzen wölben sich die Ränder der Öffnungen auf und verhaken sich an den Schrauben oder Bolzen, so dass ein sicherer Halt gewährleistet ist.

Weiter kann es vorgesehen sein, dass am Plattenzuschnitt eine weitere Öffnung vorgesehen ist, die ebenfalls wenigstens mit wenigstens einem seitlichen Einschnitt versehen sein kann. Diese Öffnung dient zur Aufnahme eines am Kabelende endseitig angeordneten Steckers, der durch Einstecken in diese Öffnung lagefixiert ist. Durch die Fixierung des Steckers ist auch der Rest des Kabelendes lagefixiert.

Der Plattenzuschnitt ist vorzugsweise aus Pappe hergestellt, da sich dieses Material günstig herstellen, leicht bearbeiten und umweltgerecht entsorgen lässt.

Ein Ausführungsbeispiel der Erfindung ist in dem in den Figuren dargestellten Ausführungsbeispiel näher dargestellt. Es zeigen:
- Fig. 1: einen oberen Bereich eines Federbeines mit einem Kabelende,
- Fig. 2: eine schräge Ansicht von oben auf ein Stützlager des Federbeines mit einem erfindungsgemäßen Transportschutz und
- Fig. 3: einen als Transportschutz verwendeten Plattenzuschnitt im unmontierten Zustand.

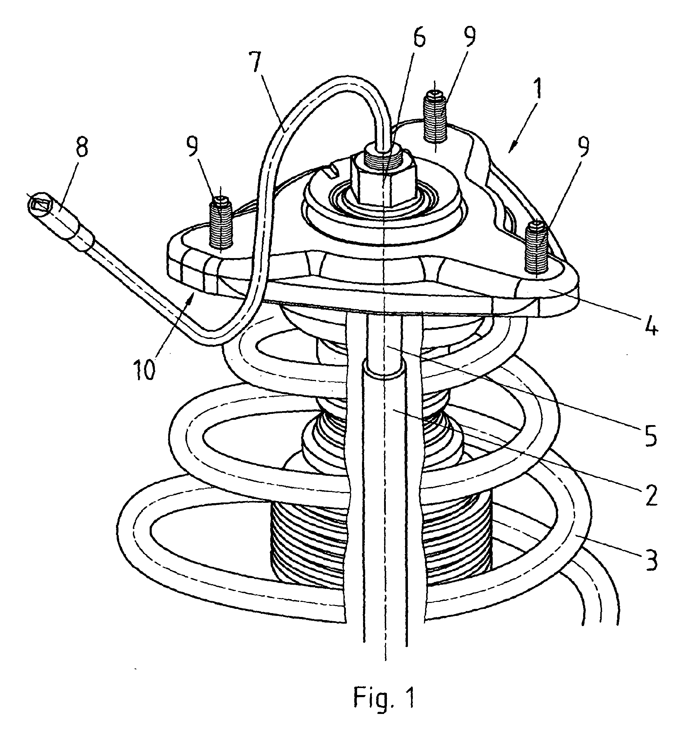

Das in Fig. 1 nur im Bereich seines einen Endbereiches dargestellte Federbein 1 besteht aus einem Dämpfer 2, einer Feder 3 und einem Stützlager 4. Eine Kolbenstange 5 des Dämpfers 2 ist mit dem Stützlager 4 durch eine Verschraubung verbunden, von der hier nur die Mutter 6 dargestellt ist. Die Kolbenstange 5 ist hohl ausgeführt und nimmt ein Kabel auf, von dem nur das aus der Kolbenstange 5 austretende Kabelende 7 in dieser Darstellung sichtbar ist. Endseits ist das Kabelende 7 mit einem Stecker 8 versehen. Zur Befestigung des Stützlagers 4 an einer nicht dargestellten Fahrzeugkarosserie sind drei Befestigungseinrichtungen, hier Schrauben 9, vorgesehen, die mit dem Stützlager 4 fest verbunden sind.

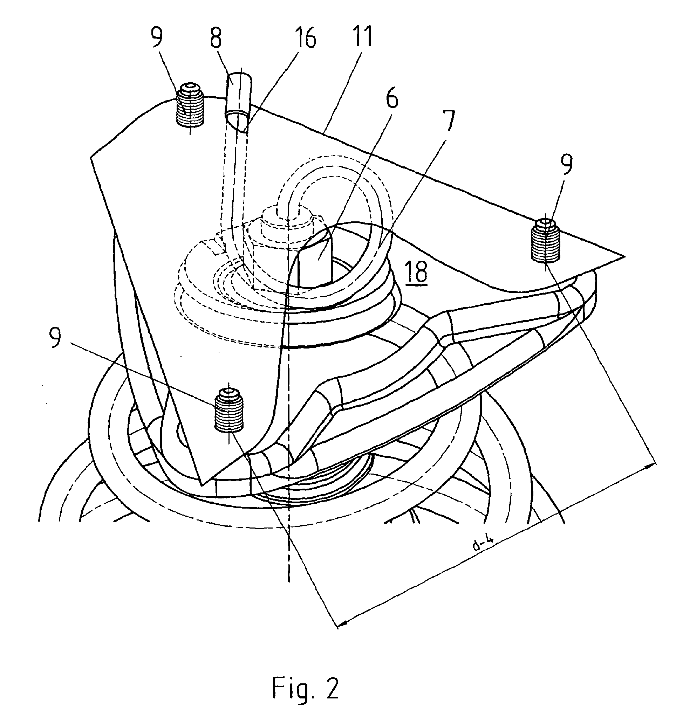

Um zu verhindern, dass das Kabelende 7 während des Transportes des Federbeines 1, beispielsweise wie in Fig. 1 gezeigt, über einen Rand 10 des Stützlagers 4 verläuft und dort beispielsweise beim Anschlagen des Randes 10 an eine Transporteinrichtung gequetscht werden kann, ist an den Schrauben 9 der in Fig. 2 dargestellte Plattenzuschnitt 11 als Transportschutz gehalten.

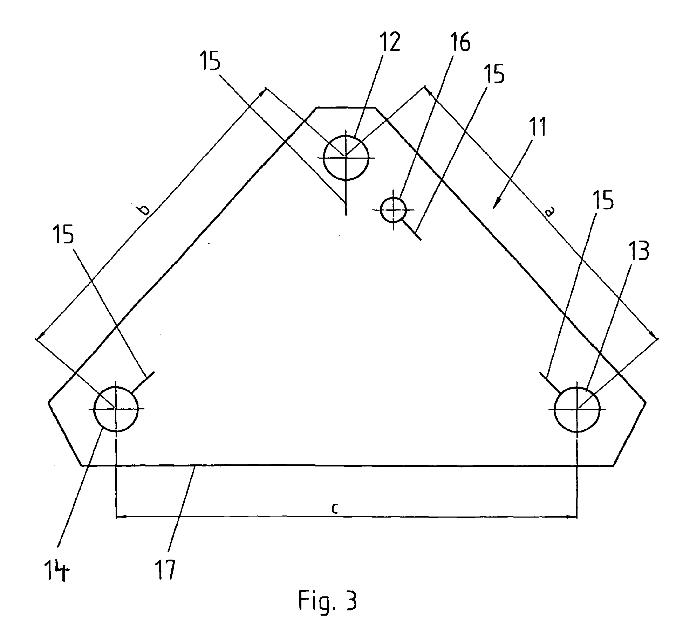

Fig. 3 zeigt den Plattenzuschnitt 11 im nicht montierten Zustand, d.h. flach liegend. Der Plattenzuschnitt 11 weist einen im wesentlichen dreieckigen Grundriss auf, wobei im Bereich der Ecken als Befestigungspunkte Öffnungen 12 bis 14 eingebracht sind. Jede der Öffnungen 12 bis 14 weist einen Durchmesser kleiner als der Durchmesser der Schrauben 9 auf. In den Plattenzuschnitt 11 eingebrachte Schlitze 15 erstrecken sich vom Rand der Öffnungen 12 bis 14 in Richtung der Mitte des Plattenzuschnittes 11. Die Abstände zwischen den Öffnungen 12 bis 14 sind mit a, b und c gekennzeichnet.

Eine vierte Öffnung 16 ist im Bereich der ersten Öffnung 12 im Plattenzuschnitt 11 vorgesehen und ebenfalls mit einem Schlitz 15 versehen. Der Durchmesser der vierten Öffnung 16 ist etwas kleiner als der Durchmesser des Steckers 8.

Die Schrauben 9 sind, wie in Fig. 2 zu sehen, gleichmäßig über den Umfang des Stützlagers 4 verteilt und weisen einen Abstand d zueinander auf. Am Plattenzuschnitt 11 sind die Abstände a und b so gewählt, dass sie dem Abstand d entsprechen. Der Abstand c ist größer als der Abstand d gewählt. Beim Aufstecken der Öffnungen 12 bis 14 auf die Schrauben 9 entsteht so im Bereich einer vorderen Kante 17 des Plattenzuschnittes 11, die den Abstand c aufweist, eine Aufwölbung 18, die einen Hohlraum zur Aufnahme des Kabelendes 7 bildet.

Wie in Fig. 2 dargestellt, ist im montierten Zustand des Plattenzuschnittes 11 der Stecker 8 in der Öffnung 16 gehalten und das aufgerollte Kabelende 7 vollständig von der Wölbung 18 aufgenommen, so dass der Plattenzuschnitt 11 als Transportschutz für das Kabelende 7 wirkt.

## Patentansprüche

1. Anordnung eines Transportschutzes für Kabelenden (7) an Federbeinen (1) von Kraftfahrzeugen, wobei das Kabelende aus einer hohlen Kolbenstange (5) heraustritt, wobei am Federbein (1) im Bereich des Austrittes des Kabelendes (7) aus der Kolbenstange (5) als Transportschutz ein Plattenzuschnitt (11) mit Befestigungspunkten (12 bis 14) an korrespondierenden Befestigungseinrichtungen (9) des Federbeines gehalten ist, wobei am Plattenzuschnitt (11) der Abstand (c) zweier gegenüberliegender Befestigungspunkte (13, 14) größer gewählt ist als der Abstand (d) der korrespondierenden Befestigungseinrichtungen (9) am Federbein (1), so dass der Plattenzuschnitt (11) an den Befestigungseinrichtungen (9) des Federbeines (1) so gehalten ist, dass er eine gewölbte Form annimmt.

2. Anordnung nach Anspruch 1, **dadurch gekennzeichnet, dass** der Plattenzuschnitt (11) drei Befestigungspunkte (12, 13, 14) aufweist.

3. Anordnung nach Anspruch 1, **dadurch gekennzeichnet, dass** die Befestigungseinrichtungen am Federbein Schrauben (9) oder Bolzen sind, die Befestigungspunkte (12, 13, 14) des Plattenzuschnittes (11) Öffnungen im Plattenzuschnitt (11) sind, und die Öffnungen gegenüber dem Durchmesser der Schrauben (9) oder Bolzen mit Untermaß ausgeführt und mit wenigstens einem seitlichen Einschnitt versehen sind.

4. Anordnung nach Anspruch 1, **dadurch gekennzeichnet, dass** am Plattenzuschnitt (11) eine weitere Öffnung vorgesehen ist, in die ein am Kabelende (7) endseitig angeordneter Stecker (8) einsteckbar ist.

5. Anordnung nach Anspruch 1, **dadurch gekennzeichnet, dass** der Plattenzuschnitt (11) aus Pappe besteht.

## Claims

1. A transport protection arrangement for cable ends (7) on suspension struts (1) of motor vehicles, wherein the cable end issues from a hollow piston rod (5), wherein, on the suspension strut (1) in the region in which the cable end (7) issues from the piston rod (5), a plate-type cutout (11) with fastening points (12 to 14) is held on corresponding fastening devices (9) of the suspension strut and provides transport protection, wherein the distance (c) between two opposing fastening points (13, 14) on the plate-type cutout (11) is greater than the distance (d) between the corresponding fastening devices (9) on the suspension strut (1), with the result that the plate-type cutout (11) is held on the fastening devices (9) of the suspension strut (1) so that it adopts a curved shape.

2. An arrangement according to claim 1, **characterised in that** the plate-type cutout (11) has three fastening points (12, 13, 14).

3. An arrangement according to claim 1, **characterised in that** the fastening devices on the suspension strut are screws (9) or bolts, the fastening points (12, 13, 14) of the plate-type cutout (11) are openings in the plate-type cutout (11), and the openings are undersized in relation to the diameter of the screws (9) or bolts and are provided with at least one lateral incision.

4. An arrangement according to claim 1, **characterised in that** a further opening is provided in the plate-type cutout (11), into which opening a plug (8) arranged at the tip of the cable end (7) is insertable.

5. An arrangement according to claim 1, **characterised in that** the plate-type cutout (11) is made of cardboard.

## Revendications

1. Système de protection pour le transport pour des extrémités de câble (7) sur des jambes de suspension (1) dans des véhicules automobiles, l'extrémité de câble (7) s'avançant hors d'une tige de piston (5) creuse, dans lequel système, sur la jambe de suspension (1) dans la zone de la sortie de l'extrémité de câble (7) hors de la tige de piston (5), une découpe plate (11), formant un système de protection pour le transport, est maintenue par des points de fixation (12 à 14) sur des dispositifs de fixation (9) correspondants de la jambe de suspension, la distance (c) entre deux points de fixation (13, 14) face à face sur la découpe plate (11) étant choisie plus grande que la distance (d) entre des dispositifs de fixation (9) correspondants sur la jambe de suspension (1), de telle sorte que la découpe plate (11), est maintenue contre les dispositifs de fixation (9) de la jambe de suspension (1) de manière à obtenir une forme cintrée.

2. Système selon la revendication 1, **caractérisé en ce que** la découpe plate (11) comporte trois points de fixation (12, 13, 14).

3. Système selon la revendication 1, **caractérisé en ce que** les dispositifs de fixation sur la jambe de suspension sont des vis (9) ou des boulons, les points de fixation (12, 13, 14) de la découpe plate (11) sont des orifices ménagés dans la découpe plate (11), et les orifices ont un diamètre inférieur au diamètre des vis (9) ou des boulons et sont munis d'au moins une entaille latérale.

4. Système selon la revendication 1, **caractérisé en ce qu'**il est prévu sur la découpe plate (11) un orifice supplémentaire, dans lequel peut être enfichée une prise de courant (8) disposée au bout de l'extrémité de câble (7).

5. Système selon la revendication 1, **caractérisé en ce que** la découpe plate (11) est réalisée en carton pâte.
